# EUROPEAN PATENT SPECIFICATION

(11) **EP 3 161 886 B1**
(45) Date of publication and mention of the grant of the patent: **09.01.2019**
(21) Application number: 15734020.9
(22) Date of filing: 25.06.2015
(51) Int. Cl.: H01M 8/02

(54) **FLOW FIELDS FOR USE WITH AN ELECTROCHEMICAL CELL**
STRÖMUNGSFELDER ZUR VERWENDUNG MIT EINER ELEKTROCHEMISCHEN ZELLE
CHAMPS D'ÉCOULEMENT POUR UTILISATION AVEC UNE CELLULE ÉLECTROCHIMIQUE

(30) Priority: 27.06.2014 US 201462017943 P
(43) Date of publication of application: 03.05.2017
(73) Proprietor: Nuvera Fuel Cells, LLC, Billerica, MA 01821 (US)
(72) Inventor: LUNT, Benjamin, S., Tewksbury, MA 01876 (US); GAMBINI, Filippo, Boston, MA 02109 (US); BLANCHET, Scott, Chelmsford, MA 01824 (US)
(74) Representative: Finnegan Europe LLP
(86) International application number: PCT/US2015/037684
(87) International publication number: WO 2015/200629

(56) References cited:
- WO-A2-98/33221
- US-A1- 2013 337 366
- US-A1- 2014 099 566

## Description

The present disclosure is directed to electrochemical cells and, more specifically, to the design of flow fields for use in electrochemical cells.

Electrochemical cells, usually classified as fuel cells or electrolysis cells, are devices used for generating current from chemical reactions, or inducing a chemical reaction using a flow of current. A fuel cell converts the chemical energy of fuel (e.g., hydrogen, natural gas, methanol, gasoline, etc.) and an oxidant (air or oxygen) into electricity and waste products of heat and water. A basic fuel cell comprises a negatively charged anode, a positively charged cathode, and an ion-conducting material called an electrolyte.

Different fuel cell technologies utilize different electrolyte materials. A Proton Exchange Membrane (PEM) fuel cell, for example, utilizes a polymeric ion-conducting membrane as the electrolyte. In a hydrogen PEM fuel cell, hydrogen atoms are electrochemically split into electrons and protons (hydrogen ions) at the anode. The electrons then flow through the circuit to the cathode and generate electricity, while the protons diffuse through the electrolyte membrane to the cathode. At the cathode, hydrogen protons combine with electrons and oxygen (supplied to the cathode) to produce water and heat.

An electrolysis cell represents a fuel cell operated in reverse. A basic electrolysis cell functions as a hydrogen generator by decomposing water into hydrogen and oxygen gases when an external electric potential is applied. The basic technology of a hydrogen fuel cell or an electrolysis cell can be applied to electrochemical hydrogen manipulation, such as, electrochemical hydrogen compression, purification, or expansion. Electrochemical hydrogen manipulation has emerged as a viable alternative to the mechanical systems traditionally used for hydrogen management. Successful commercialization of hydrogen as an energy carrier and the long-term sustainability of a "hydrogen economy" depend largely on the efficiency and cost-effectiveness of fuel cells, electrolysis cells, and other hydrogen manipulation/management systems.

In operation, a single fuel cell can generally generate about 1 volt. To obtain the desired amount of electrical power, individual fuel cells are combined to form a fuel cell stack, wherein fuel cells are stacked together sequentially. Each fuel cell may include a cathode, an electrolyte membrane, and an anode. A cathode / membrane / anode assembly constitutes a "membrane electrode assembly," or "MEA," which is typically supported on both sides by bipolar plates. Reactant gases (hydrogen and air or oxygen) are supplied to the electrodes of the MEA through channels or grooves formed in the plates, which are known as flow fields. In addition to providing mechanical support, the bipolar plates (also known as flow field plates or separator plates) physically separate individual cells in a stack while electrically connecting them. A typically fuel cell stack includes manifolds and inlet ports for directing the fuel and oxidant to the anode and cathode flow fields, respectively. A fuel cell stack also includes exhaust manifolds and outlet ports for expelling the excess gases and the coolant water.

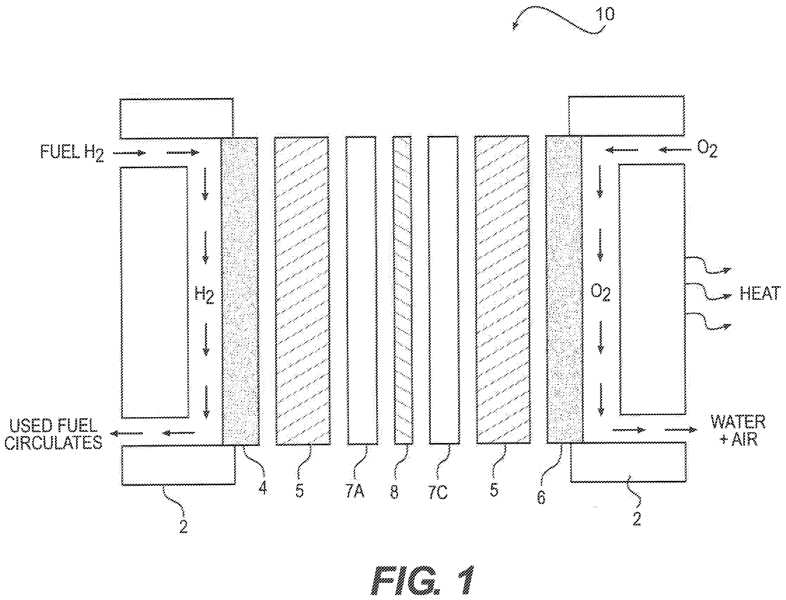

FIG. 1 is an exploded schematic view showing the various components of a prior art PEM fuel cell 10. As illustrated, bipolar plates 2 flank the "membrane electrode assembly" (MEA), which comprises an anode 7 A, a cathode 7C, and an electrolyte membrane 8. Hydrogen atoms supplied to anode 7 A are electrochemically split into electrons and protons (hydrogen ions). The electrons flow through an electric circuit to cathode 7C and generate electricity in the process, while the protons move through electrolyte membrane 8 to cathode 7C. At the cathode, protons combine with electrons and oxygen (supplied to the cathode) to produce water and heat.

Additionally, prior art PEM fuel cell 10 includes electrically-conductive gas diffusion layers (GDLs) 5 within the cell on each side of the MEA. Gas diffusion layers 5 serve as diffusion media enabling the transport of gases and liquids within the cell, provide electrically conduction between bipolar plates 2 and electrolyte membrane 8, aid in the removal of heat and process water from the cell, and in some cases, provide mechanical support to electrolyte membrane 8. Gas diffusion layers 5 can comprise a woven or nonwoven carbon cloth with electrodes 7 A and 7C coated on the sides facing the electrolyte membrane. In some cases the electrocatalyst material can be coated onto either the adjacent GDL 5 or the electrolyte membrane 8.

Generally, carbon-fiber based gas diffusion layers do not meet the performance requirements of a high-differential pressure cell, particularly because of limited structural properties of these materials. Therefore, some high-pressure electrochemical cells use "frit-type" densely sintered metals, screen packs, or expanded metals in combination with or as a replacement for traditional GDLs to provide structural support to the MEA in combination with traditional, land-channel flow fields 4 formed in the bipolar plates 2. Layered structures (i.e., screen packs and expanded metals) provide relatively thick structures suitable for high differential pressure operations. However, they introduce other performance penalties such as, for example, high contact resistance, high flow resistance, large cell pitch, etc. To overcome the physical limitations of these layered structures, three-dimensional porous metallic structures can be used as a replacement for traditional land-channel flow fields 4 and/or GDLs 5 in high differential pressure electrochemical cells.

In an electrochemical cell using porous metallic flow fields, reactant gases on each side of the electrolyte membrane flow through the porous metallic flow fields to reach the electrolyte membrane. Like traditional land-channel flow fields, it is desirable that these porous metallic structures facilitate the even distribution of the reactant gas to the electrode so as to achieve high performance of an individual fuel cell. Additionally, it is desirable not to create excessive pressure drop in the reactant gas flow, which can otherwise consume some of the electrical energy generated by the fuel cell stack and lower the overall efficiency of the fuel cell stack. As such, there is a continuing challenge to improve the design of the porous metallic flow fields used with electrochemical cells.

One way to improve the overall performance and power density of a fuel cell stack can be to reduce the pitch (i.e., spacing) between adjacent cells of the fuel cell stack. For cells employing porous metallic flow fields, cell pitch can be reduced by reducing the thickness of the flow fields of each individual fuel cell. This, however, can be difficult to achieve without creating an excessive pressure drop in the reactant gas flow, which can increase the load on the fuel cell stack.

In particular, a fuel cell stack can be coupled to an air compressor to pressurize the reactant gases (e.g., oxygen) supplied to the inlet manifolds of the flow fields to overcome the pressure drop across each flow fields. The power consumed by the air compressor is generally not negligible, and can range around 20KW for a 110kW net system. It is desirable to control the pressure drop in the reactant gas flow in order to regulate the amount of power consumed by the air compressor associated with the stack. This can often limit the design of the flow fields used with electrochemical cells.

The present disclosure is directed towards the design of flow fields for use with electrochemical cells. In particular, the present disclosure is directed towards the design of porous metallic flow fields for use in electrochemical cells for improving the overall performance and power density of the fuel cell stack. These devices can be used in electrochemical cells operating under high differential pressures including, but not limited to, fuel cells, electrolysis cells, and hydrogen compressors. One aspect provides a flow field for use in an electrochemical cell comprising a porous metallic structure including an inlet port; a plurality of features formed in the structure, the plurality of features being in fluid communication with the inlet port to receive a reactant gas and configured to cause the reactant gas to flow through the porous metallic structure between adjacent features; wherein the plurality of features are a plurality of channels wherein dimples are formed about each of the plurality of channels. Another aspect provides an electrochemical cell comprising a first bipolar plate; a second bipolar plate; a membrane electrode assembly comprising a cathode, an anode, and a polymer membrane disposed between the cathode and the anode; at least one such flow field disposed between one of the first bipolar plate and the second bipolar plate and the membrane electrode assembly. Another aspect provides a method of fabricating such an open, porous flow field for use in an electrochemical cell, the method comprising selecting a porous metallic material having greater than about 70% void volume; and stamping the plurality of features into the metallic material.

In an illustrative embodiment of the present disclosure, the flow fields are fabricated using metal foams or other porous metallic substrates. Channels are provided in a surface of the porous metallic flow fields through which the reactant gas can flow, which can reduce the pressure drop across the porous metallic flow field compared to other porous metallic fluid field structures. This allows other parameters of the fuel cell stack to be modified without increasing the amount of energy required to compress the gas supplied to fuel cell stack.

In accordance with embodiments of the present disclosure, a thickness of the porous metallic flow field may be reduced compared to other porous metallic fluid field structures without impacting the pressure of the reactant gas supplied to the inlet manifold of the fuel cell stack. Reducing the thickness of each individual fuel cell can, in tum, reduce the cell pitch (i.e., spacing between adjacent cells) and allow for additional cells to be added to the fuel cell stack to improve the overall power density and performance of the fuel cell stack.

It is to be understood that both the foregoing general description and the following detailed description are and explanatory only and are not restrictive of the disclosure, as claimed.

The accompanying drawings, which are incorporated in and constitute a part of this specification, illustrate embodiments of the present disclosure and together with the description, serve to explain the principles of the disclosure.
FIG. 1 illustrates an exploded schematic view showing the various components of a Proton Exchange Membrane (PEM) fuel cell.
FIG. 2 is a schematic view of part of an electrochemical cell.
FIG. 3 is a side view of a flow field.
FIG. 4A is a cross-sectional view of the flow field without a plurality of channels.
FIG. 4B is a cross-sectional view of the flow field with a plurality of channels.
FIGS. 5A-5E illustrate various stamping patterns of the plurality of channels.

Reference will now be made in detail to the embodiments of the present disclosure, examples of which are illustrated in the accompanying drawings. Wherever possible, the sample reference numbers will be used throughout the drawings to refer to the same or like parts. Although described in relation to an electrochemical cell employing hydrogen, oxygen, and water, it is understood that the devices and methods of the present disclosure can be employed with various types of electrochemical cells, including those operating under high differential pressures.

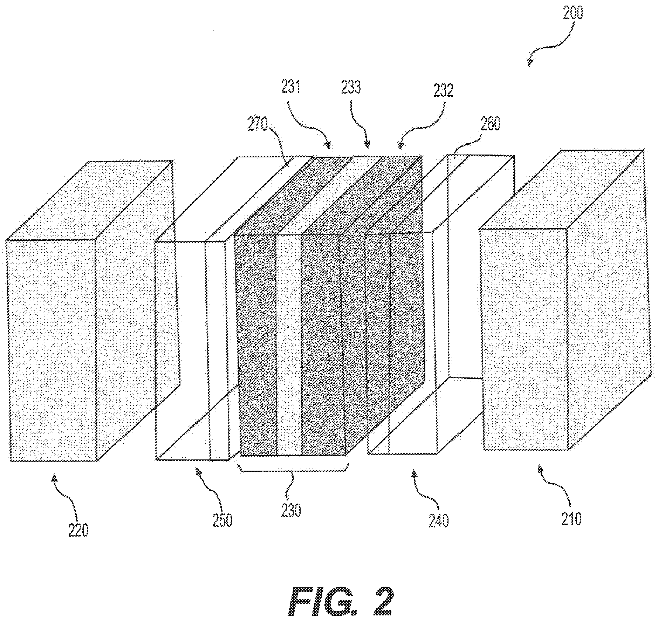

FIG. 2 shows an exploded schematic of an electrochemical cell 200. Electrochemical cell 200 can include two bipolar plates 210, 220. The two bipolar plates 210, 220 can act as support plates and conductors. Bipolar plates 210, 220 can also include access channels for circulating cooling fluid (i.e., water, glycol, or water glycol mixture) to remove heat from electrochemical cell 200. Bipolar plates 210, 220 can be made from aluminum, steel, stainless steel, titanium, copper, Ni-Cr alloy, graphite or any other electrically conductive material.

In addition to bipolar plates 210, 220, electrochemical cell 200 can include a membrane electrode assembly ("MEA"). MEA 230 can comprise an anode 231, a cathode 232, and a proton exchange membrane ("PEM") 233. PEM 233 can be disposed between anode 231 and cathode 232 electrically insulating anode 231 and cathode 232 from each other. It is contemplated that PEM 233 can comprise a pure polymer membrane or composite membrane where other materials such as, for example, silica, heterpolyacids, layered metal phosphates, phosphates, and zirconium phosphates can be embedded in a polymer matrix. PEM 233 can be permeable to protons while not conducting electrons. Anode 231 and cathode 232 can comprise porous carbon electrodes containing a catalyst layer (not shown). The catalyst material can be, for example, platinum, which can increase the reaction rate.

As illustrated in FIG. 2, a cathode flow field 240 and an anode flow field 250 flank MEA 230. Cathode flow field 240 and anode flow field 250 can provide electrical conduction between bipolar plates 210, 220 and MEA 230, while also providing a media for transport of gases and liquid within electrochemical cell 200. In addition, cathode flow field 240 and anode flow field 250 can provide mechanical support to MEA 230.

Cathode flow field 240 and anode flow field 250 can comprise three-dimensional porous metallic structures. The cathode flow field 240 and anode flow field 250 can be formed by compacting a highly porous metallic material, such as, a foam, sintered metal frit, or any other porous metal. The porous metallic material can comprise a metal such as, for example, stainless steel, titanium, aluminum, nickel, iron, etc., or a metal alloy such as nickel-chrome alloy, etc. The pore size of the metallic material can range from about 20 µm to about 1000 µm. For example, the pore size of the metallic material can range from about 20 µm to about 1000 µm, such as from about 50 µm to about 1000 µm, from about 20 µm to about 900 µm, etc, from about 30 µm to about 800 µm, from about 40 µm to about 700 µm, from about 50 µm to about 600 µm, from about 60 µm to about 500 µm, from about 70 µm to about 500 µm, from about 100 µm to about 450 µm, from about 200 µm to about 450 µm, and from about 350 µm to about 450 µm. The average pore size of the metallic material is about 400 µm, about 500 µm, or about 800 µm. The void volume of the metallic material ranges from about 70% to about 99%. For example, the void volume of the metallic material can range from about 70% to about 98%, such as from about 75% to about 98%, from about 75% to about 95%, from about 75% to about 90%, from about 75% to about 85%, from about 70% to about 80%, from about 73% to about 77%, from about 80% to about 90%, from about 83% to about 87%, from about 90% to about 99%, and from about 93% to about 97%. The void volume of the metallic material can be about 75%, about 85%, or about 95%.

Electrochemical cell 200 can additionally include an electrically conductive gas-diffusion layer (GDL) 260, 270 on each side of MEA 230. The disclosed porous metallic flow fields may be used with conventional GDLs. However, it is contemplated that the porous metallic structure can perform the functions typically required of GDLs, thereby introducing the possibility of eliminating the GDLs from the electrochemical cell assembly. Alternatively, a porous metallic structure consisting of two distinct layers having different average pore sizes (for example, larger pores constituting the flow field and smaller pores replacing the GDL) can be placed in contact with MEA 230.

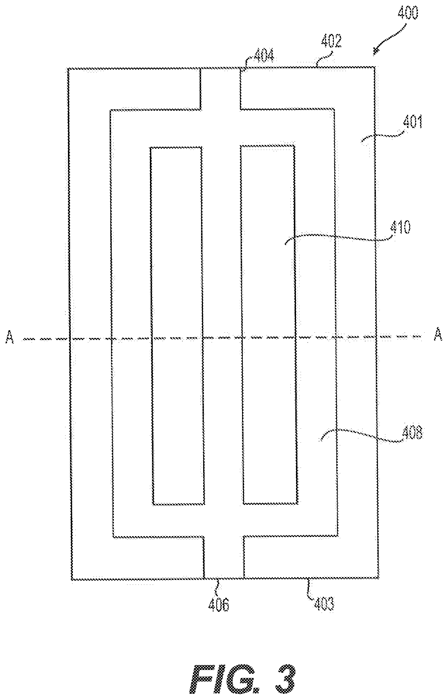

A top view of a flow field 400 is shown in FIG. 3. As illustrated, flow field 400 includes a longitudinally extending surface 401 defining a first edge 402 and a second edge 403. An inlet port 404 can be disposed at first edge 402, and an outlet port 406 can be disposed at second edge 403. It will be understood that inlet port 404 and outlet port 406 can be located at any other position or structure on flow field 400. Inlet port 404 and outlet port 406 can comprise apertures partially or fully extending across the thickness of flow field 400. Inlet port 404 can be configured to receive a reactant gas (e.g., fuel, oxygen, or air) and outlet port 406 can be configured to remove the depleted gas from flow field 400. Alternatively, inlet port 404 can be formed in the bipolar plate 210, 220 of electrochemical cell 200.

As illustrated, a plurality of features, for example, channels 408 can be formed within a structure or surface of flow field 400. The plurality of channels 408 can be formed on a surface of flow field 400 extending in a direction towards a bipolar plate and away from GDL. The plurality of channels 408 can be in fluid communication with inlet port 404 to receive a reactant gas and/or an outlet port 406 to remove the depleted gas from the cell. Further, the plurality of channels 408 can be substantially free of obstructions to fluid flow to allow distribution of the reactant gas through flow field 400.

The plurality of channels 408 can be formed within a structure or on surface 401 of flow field 400, and extend from first edge 402 (e.g., a proximal end of flow field 400) to second edge 403 (e.g., a distal end of flow field 400). The plurality of channels 408 can have any known arrangement on surface 401 of flow field 400. For example, the plurality of channels 408 can have serpentine, straight parallel, wave, zigzag, or interdigitated configurations. Further, the plurality of channels 408 can extend fully or partially between first edge 402 and second edge 403. Other arrangements and cross-sections of channels 408 are contemplated.

The plurality of channels 408 can have any suitable width, cross-sectional area, depth, shape, and/or configuration to, for example, distribute the reactant gas along the length of each of the plurality of channels 408. Lands 410 (FIG. 3C) can be disposed between adjacent channels 408. The lands 410 can have any suitable width, cross-sectional area, height, shape and/or configuration. The plurality of channels 408 can be evenly distributed across the width of flow field 400 such that lands 410 between adjacent channels can also have uniform widths. The plurality of channels 408 can be non-uniformly distributed and configured to preferentially skew gas flow and optimize cell performance. It is contemplated that the plurality of channels 408 can have different shapes and/or cross-sectional areas across a width of flow field 400, in which case, the widths of adjacent lands 410 can differ. It is contemplated that the ratio between the height of lands and the widths of the adjacent channels may be optimized to reduce the pressure drop across flow field 400.

In accordance with an embodiment of the present disclosure, the plurality of channels 408 can be formed on surface 401 of flow field 400 by, for example, stamping the porous metallic structure. In this manner, the plurality of channels 408 of the disclosed flow field provide a larger cross-sectional area through which the reactant gas can flow, which can reduce the pressure drop across the porous metallic flow field compared to other porous metallic fluid field structures. This can reduce the amount of energy required to pressurize the reactant gas supplied to the flow fields, which, in turn, can allows other parameters of the fuel cell stack to be modified without increasing the amount of energy required to compress the reactant gas supplied to fuel cell stack.

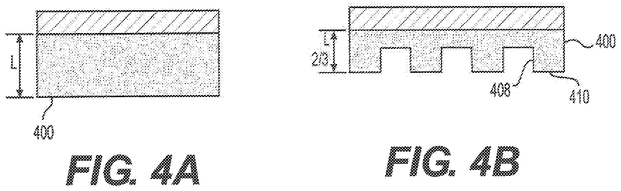

For example, a thickness of the porous metallic flow field may be reduced compared to other porous metallic fluid field structures without impacting the pressure of the reactant gas supplied to inlet port 404. This is shown in FIGS. 4A and 4B. FIG. 4B is a cross-sectional view of flow field 400 through line A-A of FIG. 3, and FIG. 4A is a cross-sectional view of a porous flow field without the plurality of channels 408. As illustrated, the thickness of the flow fields can have a thickness L that is at least 1/3 of the thickness of porous metallic fluid field structures without channels stamped therein. Reducing the thickness of each individual fuel cell can have certain benefits. For example, reducing the thickness of each individual fuel cell can reduce the cell pitch i.e., spacing, between adjacent cells. This can allow for additional cells to be added to the fuel cell stack to improve the overall power density and performance of the fuel cell stack without sacrificing the efficiency of the stack. Further, the fuel cell operation could approach an almost isothermal operation with a temperature that will be close to the average of a standard operating fuel cell, which could, in effect, improve the voltage and the efficiency of the cell while avoiding the presence of extremely high temperature points inside the cell.

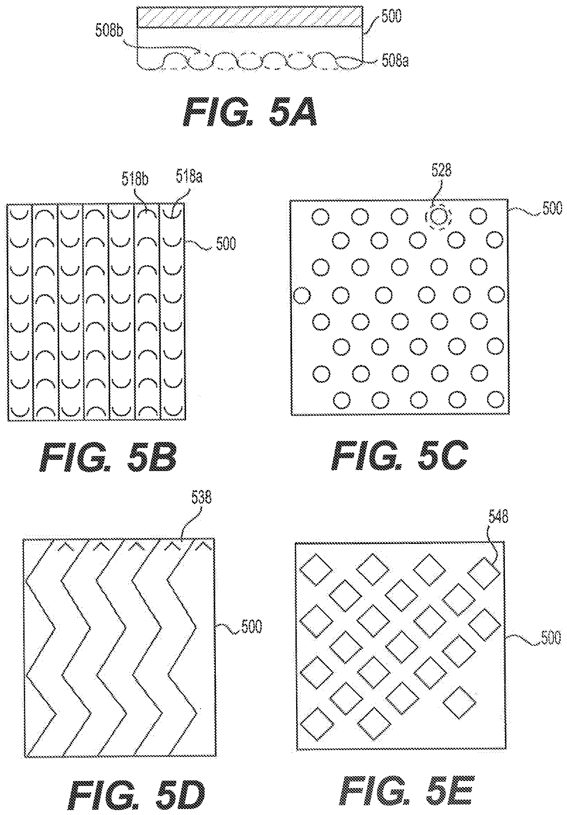

Alternative stamping patterns of the plurality of channels are shown in FIGS. 5A-5E. In FIG. 5A, a first plurality of channels 508a and a second plurality of channels 508b may be formed within a structure or on a surface of flow field 500. The second plurality of channels 508b may be offset from the first plurality of channels 508a and may, terminate in flow field 400. In FIG. 5B, each channel can have a semi-circular cross-section. Further, a first plurality of channels 518a and a second plurality of channels 518b can have alternative arrangements in flow field 500. In FIG. 5C, dimples 528 can be stamped about each channel formed in flow field 500. FIG. 5D depicts a plurality of channels 538 having a zig-zag configuration, and FIG. 5E depicts a plurality of channels arranged in a cross-hatch configuration.

Other embodiments of the present disclosure will be apparent to those skilled in the art from consideration of the specification and practice of the present disclosure herein.

## Claims

1. A flow field (500) for use in an electrochemical cell comprising:
a porous metallic structure including an inlet port;
a plurality of features formed in the structure, the plurality of features being in fluid communication with the inlet port to receive a reactant gas and configured to cause the reactant gas to flow through the porous metallic structure between adjacent features;
**characterized in that** the plurality of features are a plurality of channels wherein dimples (528) are formed about each of the plurality of channels.

2. The flow field of claim 1, wherein the porous metallic structure includes a metallic foam.

3. The flow field of claim 1, further including a plurality of lands (410), wherein each land is disposed between adjacent features (408) stamped in the metallic structure.

4. The flow field of claim 1, wherein the plurality of features are evenly distributed and sized to control the pressure drop across the flow field.

5. The flow field of claim 1, wherein the plurality of features are non-uniformly distributed to and configured to preferentially skew gas flow.

6. An electrochemical cell (200), comprising:
a first bipolar plate (210);
a second bipolar plate (220);
a membrane electrode assembly (230) comprising a cathode (232), an anode (231), and a polymer membrane (233) disposed between the cathode and the anode; and
at least one flow field (240, 250) according to any preceding claim disposed between one of the first bipolar plate (210) and the second bipolar plate (220) and the membrane electrode assembly (230).

7. A method of fabricating an open, porous flow field (500) according to any of claims 1-5 for use in an electrochemical cell, the method comprising:
selecting a porous metallic material having greater than about 70% void volume; and
stamping the plurality of features (528) into the metallic material.

## Patentansprüche

1. Strömungsfeld (500) zur Verwendung in einer elektrochemischen Zelle, umfassend:
eine poröse metallische Struktur mit einer Einlassöffnung;
eine Vielzahl von Merkmalen, die in der Struktur gebildet sind, wobei die Vielzahl von Merkmalen in Fluidverbindung mit der Einlassöffnung ist, um ein Reaktionsgas zu erhalten, und
konfiguriert ist, um zu bewirken, dass das Reaktionsgas durch die poröse metallische Struktur zwischen benachbarten Merkmalen strömt;
**dadurch gekennzeichnet, dass** die Vielzahl von Merkmalen eine Vielzahl von Kanälen ist, wobei Mulden (528) um jeden der Vielzahl von Kanälen gebildet sind.

2. Strömungsfeld nach Anspruch 1, wobei die poröse metallische Struktur einen metallischen Schaumstoff beinhaltet.

3. Strömungsfeld nach Anspruch 1, ferner beinhaltend eine Vielzahl von Erhebungen (410), wobei jede Erhebung zwischen benachbarten Merkmalen (408) angeordnet ist, die in die Metallstruktur geprägt sind.

4. Strömungsfeld nach Anspruch 1, wobei die Vielzahl von Merkmalen gleichförmig verteilt und bemessen ist, um den Druckabfall über das Strömungsfeld zu regulieren.

5. Strömungsfeld nach Anspruch 1, wobei die Vielzahl von Merkmalen ungleichförmig verteilt und konfiguriert ist, um vorzugsweise einen Gasstrom zu verzerren.

6. Elektrochemische Zelle (200), umfassend:
eine erste bipolare Platte (210);
eine zweite bipolare Platte (220);
eine Membran-Elektroden-Anordnung (230), die eine Kathode (232), eine Anode (231) und eine Polymermembran (233) umfasst, die zwischen der Kathode und der Anode angeordnet ist; und
mindestens ein Strömungsfeld (240, 250) gemäß einem vorherigen Anspruch, das zwischen einer von der ersten bipolaren Platte (210) und der zweiten bipolaren Platte (220) und der Membran-Elektroden-Anordnung (230) angeordnet ist.

7. Verfahren zur Herstellung eines offenen, porösen Strömungsfelds (500) nach einem der Ansprüche 1-5 zur Verwendung in einer elektrochemischen Zelle, wobei das Verfahren Folgendes umfasst:
Auswählen eines porösen metallischen Materials mit mehr als etwa 70 % Porenvolumen; und
Prägen der Vielzahl von Merkmalen (528) in das metallische Material.

## Revendications

1. Champ d'écoulement (500) destiné à être utilisé dans une cellule électrochimique comprenant :
une structure métallique poreuse incluant un orifice d'entrée ;
une pluralité d'éléments formés dans la structure, la pluralité d'éléments étant en communication fluidique avec l'orifice d'entrée pour recevoir un gaz réactif et configuré pour amener le gaz réactif à s'écouler à travers la structure métallique poreuse entre des éléments adjacents ;
**caractérisé en ce que** la pluralité d'éléments est une pluralité de canaux dans lequel des alvéoles (528) sont formées autour de chaque canal de la pluralité de canaux.

2. Champ d'écoulement selon la revendication 1, dans lequel la structure métallique poreuse inclut une mousse métallique.

3. Champ d'écoulement selon la revendication 1, incluant en outre une pluralité de saillies (410), dans lequel chaque saillie est disposée entre des éléments adjacents (408) estampillés dans la structure métallique.

4. Champ d'écoulement selon la revendication 1, dans lequel la pluralité d'éléments sont répartis de manière régulière et dimensionnés pour réguler la chute de pression à travers le champ d'écoulement.

5. Champ d'écoulement selon la revendication 1, dans lequel la pluralité d'éléments sont répartis de manière non uniforme et configurés préférablement pour biaiser l'écoulement de gaz.

6. Cellule électrochimique (200), comprenant :
une première plaque bipolaire (210) ;
une deuxième plaque bipolaire (220) ;
un ensemble formant électrode à membrane (230) comprenant une cathode (232), une anode (231), et une membrane polymère (233) disposée entre la cathode et l'anode ;
et au moins un champ d'écoulement (240, 250) selon l'une quelconque des revendications précédentes disposé entre une plaque parmi la première plaque bipolaire (210) et la deuxième plaque bipolaire (220) et l'ensemble formant électrode à membrane (230).

7. Procédé de fabrication d'un champ d'écoulement poreux (500), ouvert, selon l'une quelconque des revendications 1 à 5 destiné à être utilisé dans une cellule électrochimique, le procédé comprenant :
la sélection d'un matériau métallique poreux ayant plus de 70 % de volume vide ;
et l'estampillage de la pluralité d'éléments (528) dans le matériau métallique.
